# EUROPÄISCHE PATENTSCHRIFT

(11) **EP 1 983 250 B1**
(45) Veröffentlichungstag und Bekanntmachung des Hinweises auf die Patenterteilung: **11.08.2010**
(21) Anmeldenummer: 08152516.4
(22) Anmeldetag: 10.03.2008
(51) Int. Cl.: F16M 11/04, F16M 11/10

(54) **Stativkopf**
Tripod head
Tête de support

(30) Priorität: 17.04.2007 DE 102007018029
(43) Veröffentlichungstag der Anmeldung: 22.10.2008
(73) Patentinhaber: Camera Dynamics GmbH, 85386 Eching (DE)
(72) Erfinder: Jaumann, Leonhard, 80995 München (DE); Mollenhauer, Berthold, 81379 München (DE)
(74) Vertreter: HOFFMANN EITLE

(56) Entgegenhaltungen:
- WO-A-2006/018011
- DE-U1- 7 618 433
- GB-A- 2 080 406
- GB-A- 2 190 703
- GB-A- 2 371 283
- US-A- 3 552 699

## Beschreibung

Die vorliegende Erfindung betrifft einen Stativkopf zum verschwenkbaren Aufnehmen eines Geräts, insbesondere einer Film- oder Fernsehkamera, umfassend ein Gehäuse, eine in dem Gehäuse drehbar gelagerte Achse, eine mit der Achse in Verbindung stehende Aufnahme für das Gerät, wenigstens zwei separate Kraftspeicher die jeweils zwischen der Achse und dem Gehäuse angeordnet sind, und eine Ausgleichseinrichtung mit jeweils einer Verriegelungseinrichtung für die Kraftspeicher, um die Kraftspeicher jeweils in Wirkverbindung zwischen Gehäuse und Achse zu schalten, so dass über die Achse entsprechend dem Drehmoment des Geräts ein Rückstellmoment auf die Aufnahme ausgeübt wird und einem gemeinsamen Betätigungselement, um die Kraftspeicher über die Verriegelungseinrichtungen wählbar einzeln oder in Kombination zu schalten. Unter dem Begriff verschwenkbar ist in Bezug auf die vorliegende Erfindung eine Nickbewegung des Geräts zu verstehen, d. h. eine Schwenkbewegung um eine im Wesentlichen horizontale Achse.

Ein eingangs genannter Stativkopf ist unter anderem aus der DE 30 26 379 A1 vorbekannt. Der dort beschriebene Stativkopf beschreibt als gemeinsames Betätigungselement einen zentralen Drehring, der um das zylinderförmig ausgebildete Gehäuse des dort offenbarten Stativkopfs angeordnet ist. Auf der dem Gehäuse zugewandten Innenumfangsfläche des zentralen Betätigungsrings sind Steuernocken ausgebildet, die auf Riegelstifte als Verriegelungseinrichtungen wirken. Die Verriegelungsstifte werden durch eine Druckfeder außer Eingriff mit dem Kraftspeicher gebracht, d. h. die Wirkverbindung zwischen Gehäuse und Achse wird aufgehoben. Kommt ein Steuernocken mit einem der Riegelstifte in Eingriff, so wird der Riegelstift entgegen der Federkraft in Richtung des Kraftspeichers gedrückt und bei entsprechender Ausrichtung in der Neutralposition (ausbalancierten Position) kommt der Riegelstift mit einer Vertiefung im Kraftspeicher in Eingriff, um die Wirkverbindung herzustellen. Jedoch kann der Steuernocken nur in dieser Position vollständig über den Riegelstift gleiten, da nur in dieser Position der vollständige Hub des Riegelstiftes erfolgen kann, der sonst gegen die Außenumfangsfläche des jeweiligen Kraftspeichers gedrückt wird.

Diese Ausgestaltung hat zum einen den Nachteil, dass der Betätigungsring die Gestaltung der Außenform des Gehäuses sowie dessen Anbindung zum Stativ stark einschränkt, weil zumindest ein zentraler Abschnitt vollständig zylinderförmig sein muss. Daraus kann ferner resultieren, dass der Stativkopf in seiner Bauhöhe vergrößert ist. Zum anderen muss der Betätigungsring zentral über den Kraftspeichern sitzen und damit zumindest teilweise unter der Aufnahme verlaufen. Er kann daher schwierig zu handhaben sein.

Ferner ist bei der obigen Ausgestaltung nachteilig, dass die Riegelstifte durch die Steuernocken in Eingriff mit Vertiefungen der Kraftspeicher gedrückt werden. Damit dies reibungslos ablaufen kann, sind nur geringe Toleranzen zulässig. Darüber hinaus ist es nur möglich den zentralen Drehring in seine entsprechende Schaltstellung zu bringen, wenn die Riegelstifte auch in die Vertiefungen 19 eingreifen können, d. h. zu diesen ausgerichtet sind, so dass ein einwandfreies und einfaches Handhaben des Betätigungsrings nicht gewährleistet ist und aufgrund der geringen Toleranzen die Fertigungskosten steigen.

Schließlich ist der zentrale Betätigungsring ein relativ großes Bauteil und trägt damit erheblich zum Gewicht des Stativkopfes sowie dessen Kosten bei.

Ein Stativkopf mit den Merkmalen im Oberbegriff des Anspruchs 1 ist aus der GB-A-2 371 283 bekannt.

Angesichts der obigen Ausführungen besteht die Aufgabe der vorliegenden Erfindung darin den eingangs genannten Stativkopf derart weiterzubilden, dass eine größere Gestaltungsfreiheit bezüglich der Außenkontur des Gehäuses geschaffen wird und der Stativkopf kompakter, leichter und kostengünstiger herstellbar sowie einfacher zu handhaben ist.

Diese Aufgabe wird durch einen Stativkopf mit den Merkmalen des Patentanspruchs 1 gelöst. Vorteilhafte Weiterbildungen sind in den Unteransprüchen genannt.

Dementsprechend schlägt die vorliegende Erfindung einen Stativkopf zum verschwenkbaren Aufnehmen eines Geräts, insbesondere einer Film- oder Fernseherkamera vor, wobei es sich bei der erwähnten Schwenkbewegung um eine Nickbewegung des Geräts, d. h. eine Schwenkbewegung um eine im Wesentlichen horizontal verlaufende Achse handelt. Der erfindungsgemäße Stativkopf umfasst ein Gehäuse, das in der Regel um eine vertikal verlaufende Achse verdrehbar auf einem Stativ zu montieren ist, eine in dem Gehäuse drehbar gelagerte Achse und eine mit der Achse in Verbindung stehende Aufnahme für das Gerät. Dabei ist es unerheblich, ob die Aufnahme für das Gerät direkt oder indirekt mit der Achse in Verbindung steht. Ausschlaggebend ist nur, dass die Aufnahme um die Achse drehbar ist, um die Schwenkbewegung und damit die Nickbewegung des Geräts zu ermöglichen. Erfindungsgemäß sind wenigstens zwei separate Kraftspeicher jeweils zwischen der Achse und dem Gehäuse angeordnet. Bei diesen Kraftspeichern handelt es sich vorzugsweise um Torsionsfedern und bevorzugterweise um solche Torsionsfedern mit einem Innenring und einem Außenring zwischen denen ein elastisches Material vorgesehen ist, das die Federkraft bereitstellt. Andererseits ist auch die Verwendung von einer oder zwei Spiralfedern zwischen Innen- und Außenring denkbar. Bezüglich der Ausgestaltung der Torsionsfedern wird der Fachmann auf die eingangs erwähnte DE 30 26 379 A1 verwiesen. Des Weiteren ist erfindungsgemäß eine Ausgleichseinrichtung vorgesehen, die jeweils eine Verriegelungseinrichtung für jeden der Kraftspeicher umfasst, um die Kraftspeicher jeweils in Wirkverbindung zwischen Gehäuse und Achse zu schalten, so dass über die Achse entsprechend dem Drehmoment des Geräts ein Rückstellmoment auf die Aufnahme ausgeübt wird. Gemäß einer bevorzugten Ausführungsform und unter Verwendung der oben erwähnten Torsionsfedern ist der Innenring drehfest, z. B. über eine Nut/Federverbindung, auf der Achse angebracht und die Verriegelungseinrichtung greift zum Herstellen der Wirkverbindung zwischen Gehäuse und Achse in einen Eingriffsabschnitt, z. B. eine Vertiefung, im Außenring der Torsionsfeder. Ferner weist die Ausgleichseinrichtung des erfindungsgemäßen Stativkopfs ein gemeinsames Betätigungselement auf, um die Kraftspeicher über die Verriegelungseinrichtung wählbar einzeln oder in Kombination zu schalten. Dabei ist es zunächst nicht wesentlich, ob das Betätigungselement die Verriegelungseinrichtungen jeweils in Eingriff oder außer Eingriff mit den Kraftspeichern bringt. Die vorliegende Erfindung kennzeichnet sich insbesondere dadurch, dass das Betätigungselement als Drehscheibe ausgebildet ist, d. h. eine im Wesentlichen ebene Erstreckung aufweist. Darüber hinaus ist eine Nockensteuerung auf der dem Gehäuse zugewandten Seite der Drehscheibe vorgesehen, d. h. einem Abschnitt der Drehscheibe, der bei einer Drehung eine Oberfläche des Gehäuses bzw. eines möglichen Zwischenelements überstreicht. Die Nockensteuerung wirkt dabei derart auf die Verriegelungseinrichtungen, dass die Kraftspeicher über die Verriegelungseinrichtungen wählbar einzeln oder in Kombination schaltbar sind, unabhängig davon, ob diese durch einen aktives in Eingriff bringen der Verriegelungseinrichtungen mit den Kraftspeichern erfolgt oder umgekehrt durch ein Lösen des Eingriffs.

Das erfindungemäße Betätigungselement weist den Vorteil auf, dass es in einer nahezu beliebigen Position auf dem Gehäuse angeordnet werden kann und dadurch die Gestaltungsfreiheit des Gehäuses erhöht. Weiter ist das Betätigungselement im Vergleich zu dem zentralen Betätigungsring des Standes der Technik wesentlich kleiner mit dem Vorteil der Gewichts- und Materialkostenreduzierung. Auch trägt das Betätigungselement nicht zur Bauhöhe des Stativkopfes bei, so dass dieser insgesamt kompakter gestaltet werden kann.

Vorteilhafterweise weist die Drehscheibe eine kreisrunde Form auf, d. h. sie ist rotationssymmetrisch, so dass ein Durchdrehen des Betätigungselements möglich ist, d. h. die Schaltung von einer höchsten Einstellung, bei der alle Kraftspeicher zugeschaltet sind, in eine niedrigste Einstellung, in der am wenigsten Kraftspeicher zugeschaltet sind. Ein Zurückdrehen des Betätigungselements über die Zwischenstufen ist nicht erforderlich.

Gemäß einer bevorzugten Ausführungsform weist die Drehscheibe mehrere in gleicher Teilung entlang des Umfangs beabstandete erste Steuernocken auf, die auf eine Betätigung der Drehscheibe, d. h. ein Drehen, abwechselnd einen der Kraftspeicher schalten. Dies ist insbesondere von Vorteil, wenn wenigstens drei Kraftspeicher vorhanden sind, von denen einer eine erste Federkraft bereitstellt und die anderen beiden jeweils eine zweite Federkraft bereitstellen, die z. B. doppelt so groß ist, wie die erste Federkraft. Durch die Ausgestaltung der ersten Steuernocken entlang des Umfangs der Drehscheibe wird der Kraftspeicher mit der ersten Federkraft abwechselnd geschaltet, so dass er abwechselnd in Wirkverbindung zwischen Gehäuse und Achse steht und außer Wirkverbindung zwischen Gehäuse und Achse steht. Bevorzugterweise sind die ersten Steuernocken entlang des Außenumfangs, d. h. in der Nähe des Außenumfangs, der Scheibe angeordnet.

Insbesondere bei der zuletzt erwähnten Ausführungsform ist es bevorzugt, wenn die Drehscheibe ferner einen in Umfangsrichtung von der Mitte nach außen stufenweise breiter werdenden zweiten Steuernocken aufweist, der auf eine Betätigung der Drehscheibe nacheinander jeweils einen Kraftspeicher schaltet. Dabei können die einzelnen Stufen des zweiten Steuernockens integral oder, durch z. B. Stege oder Vertiefungen, getrennt ausgebildet sein. In Bezug auf die obigen Erläuterungen schaltet der zweite Steuernocken jeweils die Kraftspeicher mit der zweiten Federkraft. Dadurch wird es ermöglicht jeweils eine Zwischenstufe vorzusehen. D. h. es wird abwechselnd der Kraftspeicher mit der ersten Federkraft zu- oder ausgeschaltet und stufenweise immer, wenn der Kraftspeicher mit der ersten Federkraft ausgeschaltet wird, ein Kraftspeicher mit der zweiten Federkraft wieder zugeschaltet. Alternativ ist es jedoch auch denkbar, dass der erste Steuernocken 51 eine in Umfangsrichtung von innen nach außen abnehmende Breite aufweist.

Andererseits ist es auch denkbar nur den zweiten Steuernocken vorzusehen, der dann jeweils stufenweise die einzelnen Kraftspeicher schaltet oder aber in Bezug auf die obige Ausführung eine Drehscheibe, bei der konzentrisch entlang des Umfangs einzelne in Radialrichtung versetzte erste Steuernocken angeordnet sind, wobei die Steuernocken in Radialrichtung weiter außen einen der Kraftspeicher schalten und die weiter innen gelegenen Steuernocken einen anderen Kraftspeicher. Dadurch können die Kraftspeicher einzeln geschaltet werden. An einer Stelle oder mehreren Stellen können dann radial gesehen in einer Außen- und einer Innenposition zwei erste Steuernocken parallel angeordnet sein, so dass die Kraftspeicher in Kombination geschaltet werden. Es versteht sich, dass auch mehr als drei Kraftspeicher geschaltet werden können. Je nach Dimensionierung der Drehscheibe können beliebig viele Kraftspeicher geschaltet werden, was einen weiteren Vorteil der Erfindung darstellt.

Wie es aus den obigen Erläuterungen ersichtlich wird, ist eine Kombination aus ersten Steuernocken entlang des Umfangs in nur einer Reihe auf einer Kreisbahn entlang des Außenumfangs mit dem zweiten Steuernocken bevorzugt, weil durch Vorsehen von Kraftspeichern, von denen einer eine andere Federkraft als die anderen aufweist, in kleineren Stufen geschaltet werden kann.

Gemäß einer weiteren Ausführungsform der vorliegenden Erfindung umfassen die Verriegelungseinrichtungen der Ausgleichseinrichtung jeweils eine Feder, die die Verriegelungseinrichtungen in die Schaltstellung drücken, wobei die Nockensteuerung der Drehscheibe die Verriegelungseinrichtungen wahlweise aus der Schaltstellung löst. D. h. die Verriegelungseinrichtungen werden durch die Federkraft der Feder in Eingriff mit den Kraftspeichern gebracht und durch die Nocken wird dieser Eingriff gelöst, d. h. die Verriegelungseinrichtungen werden aus der Schaltstellung "gezogen". Dies führt zu dem Vorteil, dass entgegen des oben beschriebene Standes der Technik die Toleranzen nicht so klein gewählt werden müssen, da beim Lösen des Eingriffs zwischen der Nockensteuerung und der Verriegelungseinrichtungen, die direkt oder indirekt erfolgen kann (siehe später) die Verriegelungseinrichtung federbelastet auf der Außenfläche des Kraftspeichers, z. B. dem Außenring der Torsionsfeder, gleitet und bei einer Schwenkbewegung des Geräts zu einem Zeitpunkt, zu dem die Verriegelungseinrichtung mit einem Eingriffsabschnitt des Kraftspeichers, z. B. einer Vertiefung, fluchtet, damit in Eingriff kommt. Dadurch können die Herstellungskosten des erfindungsgemäßen Stativkopfes weiter vermindert und fehlerhafte Produkte vermieden werden.

Weiter werden bevorzugt Kraftspeicher in Form der oben beschriebenen Torsionsfedern verwendet, die eine sehr geringe Breite von um die 2 mm aufweisen können. Um auch derart schmale Kraftspeicher schalten zu können, ist es bevorzugt, dass die Verriegelungseinrichtungen der Ausgleichseinrichtung jeweils durch einen verschwenkbaren Hebel gebildet sind. Dieser Hebel wird vorzugsweise als Stanzteil ausgebildet und ist daher in seiner Herstellung günstig und kann im Gegensatz zu einem Riegelstift sehr schmal ausgeführt werden. Dabei ist es besonders bevorzugt, dass die schwenkbaren Hebel der einzelnen Verriegelungseinrichtungen auf einer gemeinsamen Achse sitzen, die sich im Gehäuse abstützt.

Die Nockensteuerung der Drehscheibe kann direkt oder indirekt auf die verschwenkbaren Hebel wirken.

Gemäß einer Ausführungsform weisen die Hebel jeweils einen Ansatz auf, der vorzugsweise integral mit den Hebeln ausgebildet ist und durch eine, vorzugsweise längliche, Öffnung in dem Gehäuse ragt. Die längliche Öffnung ist in einem Bereich des Gehäuses vorgesehen, der von der mit der Nockensteuerung versehenen Seite der Drehscheibe überstrichen wird. Dadurch wird es ermöglicht, dass die Nockensteuerung der Drehscheibe direkt in Eingriff mit den Ansätzen der Hebel bringbar ist, um diese zu betätigen und die Wirkverbindung zu lösen.

Alternativ ist es jedoch auch möglich in dem Gehäuse linear verschiebbare Stößel vorzusehen, die durch Öffnungen in dem Gehäuse ragen, wobei die Nockensteuerung mit diesen Stößeln in Eingriff kommt und die Stößel wiederum die Hebel betätigen.

Die Hebel sind vorzugsweise durch Schraubenfedern, Schenkelfedern und/oder ein Blattfederpaket in Richtung der Schaltstellung (Eingriff zwischen Hebel und Kraftspeicher) beaufschlagt.

Alternativ ist es jedoch auch denkbar die vorliegende Erfindung derart auszugestalten, dass die Nockensteuerung die Verriegelungselemente aktiv in die Schaltstellung drückt. Um den Vorteil der Toleranzen dennoch zu erzielen, ist es in diesem Fall jedoch bevorzugt, dass die Verriegelungseinrichtungen selbst federnd ausgestaltet sind. D. h. wenn sie beim Schalten auf eine Außenfläche des Kraftspeichers treffen, federn sie zurück und rasten selbsttätig in Eingriff mit der Vertiefung ein, wenn sie mit dieser fluchten. Bei der Ausgestaltung als Hebel (siehe unten) könnte der Hebel zweiteilig mit einem zwischengeschalteten Federelement oder aber aus einem elastischen Material gebildet sein. Bei der Ausbildung als Verriegelungsstift ist es denkbar den Verriegelungsstift unter Zwischenschaltung einer Feder, z. B. teleskopartig auszugestalten.

Gemäß einer weiter bevorzugten Ausführungsform der vorliegenden Erfindung ist zu den wenigsten zwei Kraftspeichern ein feststehender Kraftspeicher vorgesehen, der immer in Wirkverbindung zwischen Gehäuse und Achse steht, so dass die Achse entsprechend dem Drehmoment des Geräts ein Grundrückstellmoment auf die Aufnahme ausübt, wobei, wenn keiner der wenigstens zwei Kraftspeicher geschaltet ist, nur dieses Grundrückstellmoment wirkt.

Darüber hinaus ist es bevorzugt, dass die Drehscheibe zur einfachen Handhabung des Betätigungselements mit einem Drehknopf versehen ist. Dieser kann vorteilhafterweise eine Skala aufweisen, die die entsprechend aktive Schaltung anzeigt.

Weitere Merkmale und Vorteile der vorliegenden Erfindung werden darüber hinaus aus dem der folgenden Erläuterung einer bevorzugten Ausführungsform ersichtlich, die unter Bezugnahme auf die begleitenden Zeichnungen erfolgt.

In den Figuren zeigt:
Fig. 1 eine Explosionsansicht eines Stativkopfes gemäß einer ersten Ausführungsform der vorliegenden Erfindung;
Fig. 2 eine perspektivische Ansicht der Seite der Drehscheibe, die mit der Nockensteuerung versehen ist;
Fig. 3 einen Stativkopf gemäß einer alternative Ausführungsform der vorliegenden Erfindung im Schnitt.

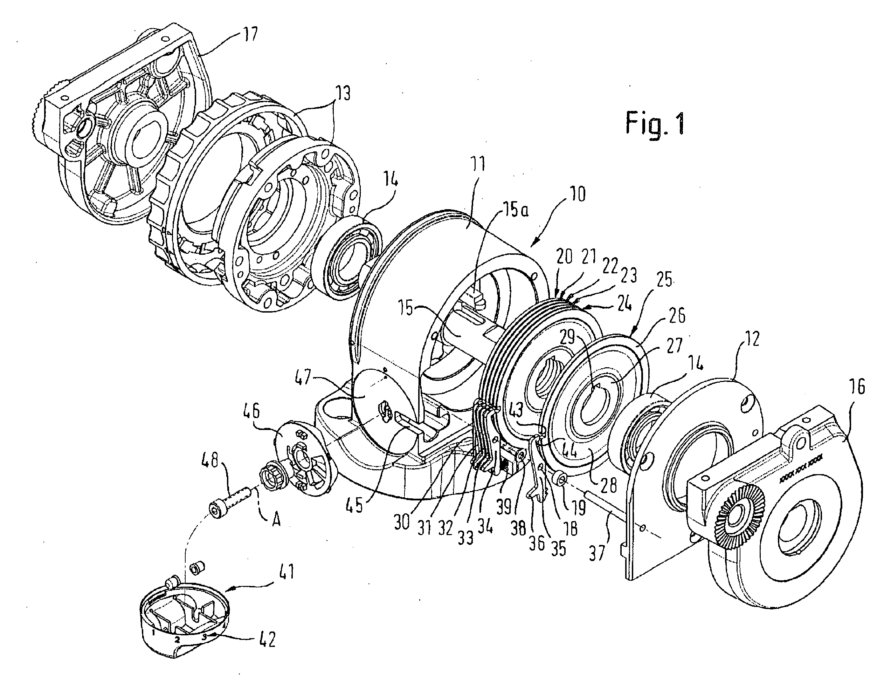

Der in Fig. 1 dargestellte Stativkopf weist ein Gehäuse 10 auf, das sich aus einem Gehäusekörper 11, einer Abdeckung 12 sowie Dämpfungselementen 13, die nicht Gegenstand der vorliegenden Erfindung sind, zusammensetzt. Über Kugellager 14 ist in dem Gehäuse 10 drehbar eine Achse 15 gelagert. Auf der Achse angebracht, sind an beiden Enden Elemente 16, 17, die im Querschnitt U-förmig sind und die Aufnahme für ein anzubringendes Gerät, insbesondere eine Film- oder Fernsehkamera, bilden. Dazu können weitere Elemente vorgesehen sein, die jedoch nicht Gegenstand der vorliegenden Erfindung sind und daher keiner genaueren Beschreibung bedürfen.

Darüber hinaus weist der Stativkopf 10 mehrere Kraftspeicher, im vorliegenden Fall sechs Kraftspeicher 20-25 auf. Die Kraftspeicher sind als Torsionsfedern mit einem Innenring 27, einem Außenring 26 und einem dazwischen angeordneten elastischen Material 28, insbesondere einem Gummi ausgebildet. Der Innenring 27 weist eine Aussparung 29 auf, in die eine auf der Achse 15 vorgesehene Nase 15a greift, um den Innenring 27 drehfest auf der Achse zu fixieren. Mit anderen Worten werden die Kraftspeicher 20-25 auf der Achse 15 drehfest angebracht, indem die Innenringe 27 in Ausrichtung der Vertiefung 29 zur Nase 15a auf die Achse 15 geschoben werden (Nut/Federverbindung). Bezüglich der Ausgestaltung der Kraftspeicher 20-25 wird der Fachmann der Einfachheit halber auf die DE 30 26 379 A1 verwiesen.

Jedem der Kraftspeicher 20-25 ist ein Hebel 30-35 zugeordnet, wobei die Hebel auf einer gemeinsamen Achse 37 sitzen, die sich in dem Gehäuse 10 abstützt. Mit anderen Worten sind die Hebel 30-35 über eine Öffnung 18 auf der Achse 37 aufgefädelt und über Abstandhalter 19 und 38 voneinander beabstandet und entsprechend zu den jeweiligen Kraftspeichern 20-25 ausgerichtet.

Der Kraftspeicher 20 ist ein feststehender Kraftspeicher und der dem Kraftspeicher 20 zugeordnete Hebel 30 steht stets in Eingriff mit der entsprechenden Vertiefung 43 des Kraftspeichers 20. Dies erfolgt in der dargestellten Ausführungsform durch eine Schraubendruckfeder 39, die den Hebel 30 um die Achse 37 mit seinem Eingriffselement 44 in die Vertiefung 43 drückt. Im Gegensatz zu den übrigen Hebeln 31-35 weist der Hebel 30 keinen integral ausgebildeten Ansatz 36 auf. Der Ansatz 36 der anderen Hebel 31-35 dient dazu die weiteren Kraftspeicher 21-25 durch die im Folgenden näher beschriebene Drehscheibe 46 zu schalten. Über die Schraubenfedern 39 werden die Hebel 31-35, wie der Hebel 30, stets in Schaltstellung beaufschlagt, d. h. die Hebel werden um die Achse 37 gegen den Außenring 26 bzw. in Eingriff mit der Vertiefung 43 beaufschlagt. Die an den Hebeln 31-35 ausgebildeten Ansätze 36 ragen im montierten Zustand durch eine in dem Gehäusekörper 11 ausgebildete längliche Öffnung 45 nach außen vor. Dabei ist die längliche Öffnung 45 in einem Bereich des Gehäusekörpers 11 vorgesehen, der von dem Abschnitt der Drehscheibe 46, der mit der Nockensteuerung (siehe später) versehen ist, überstrichen wird. Dieser Bereich ist auf dem Gehäusekörper 11 durch die Bezugsziffer 47 gekennzeichnet und schematisch angedeutet.

Die Drehscheibe 46 ist bei der dargestellten Ausführungsform eine kreisrunde Scheibe, die um eine Drehachse A drehbar ist. Die Betätigung der Drehscheibe 46 erfolgt über einen damit verbundenen Drehknopf 41, der eine Skala 42 aufweist, die die Schaltposition anzeigt. Dabei ist der Drehknopf 41 auf der dem Gehäusekörper 11 abgewandten Seite der Drehscheibe 46 an der Drehscheibe 46 befestigt. Die drehbare Befestigung der Drehscheibe 46 an dem Gehäusekörper 11 sowie die Befestigung des Drehknopfes 41 an der Drehscheibe 46 erfolgt über Befestigungselemente 48 (Schraube und/oder Clipsverbindung).

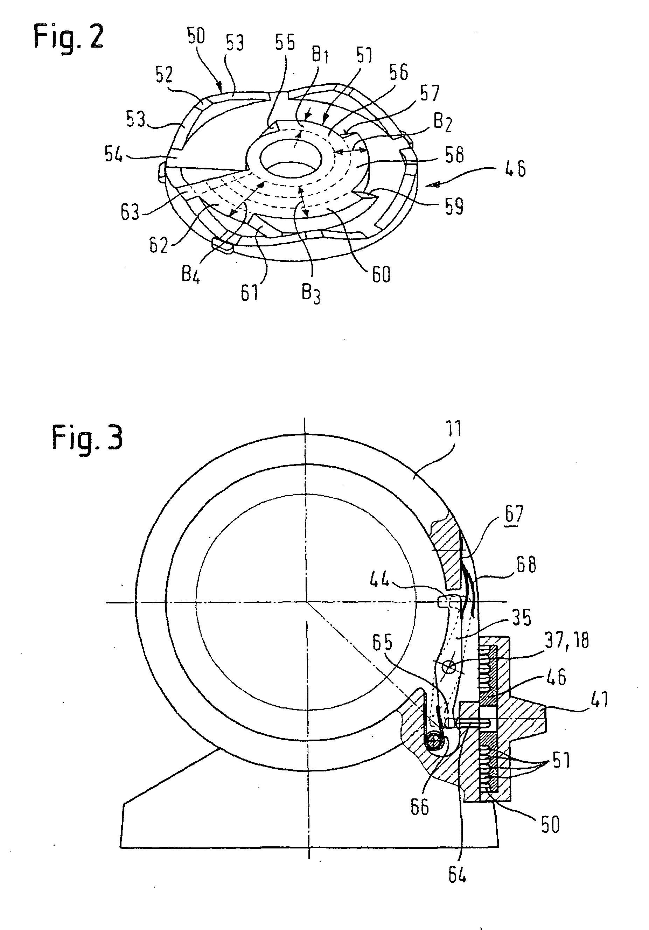

Wie es aus der perspektivischen Darstellung der Drehscheibe 46 in Fig. 2, die die Seite der Drehscheibe 46 zeigt, die dem Gehäusekörper 11 zugewandt ist, am besten ersichtlich ist, weist die Drehscheibe 46 mehrere erste Steuernocken 50 und einen zweiten Steuernocken 51 auf.

Die ersten Steuernocken 50 sind in einer gleichmäßigen Teilung in einer Reihe entlang des Umfangs der Drehscheibe 46 in der Nähe bzw. am Außenumfang angeordnet. Sie werden jeweils gebildet durch einen Betätigungsabschnitt 52 und zwei damit verbundene geneigte Rampenabschnitte 53. Zwischen den einzelnen Rampenabschnitten 53 ist jeweils ein Schaltabschnitt 54 angeordnet.

Der zweite Steuernocken 51 hat in Umfangsrichtung der Drehscheibe 46 eine von innen nach außen zunehmende Breite. Der zweite Steuernocken 51 ist integral ausgebildet und wird gebildet durch eine erste Rampe 55, die mit einem ersten Betätigungsabschnitt 56 verbunden ist, eine zweite Rampe 57, die mit einem zweiten Bestätigungsabschnitt 58 verbunden ist, eine dritte Rampe 59, die mit einem dritten Betätigungsabschnitt 60 verbunden ist und eine vierte Rampe 61, die mit einem vierten Betätigungsabschnitt 62 verbunden ist. In dem ersten Betätigungsabschnitt 56 weist der zweite Steuernocken 51 eine Breite B1 auf. Im Bereich des zweiten Betätigungsabschnitts 53 ergibt sich eine Breite B2, die sich aus der Breite B1 der ersten Betätigungsabschnitts 56 und der Breite des zweiten Betätigungsabschnitts 58 zusammensetzt. Im Bereich des dritten Betätigungsabschnitts 60 ist die Breite des zweiten Steuernockens 51 die Breite B3, die sich aus der Breite B2 und der Breite des dritten Betätigungsabschnitts 60 zusammensetzt. Schließlich beträgt die Breite B4 im Bereich des vierten Betätigungsbereichs 62 die Breite B3 addiert um die Breite des vierten Betätigungsabschnitts 62. Dabei ist die Breite B4 > B3 > B2 > B1. Der Betätigungsabschnitt 56 ist ferner am nächsten zur Mittelachse A der Drehscheibe 46 (siehe Fig. 1) angeordnet und der Betätigungsbereich 62 ist am weitesten entfernt von dieser Achse, d. h. am nächsten zum Außenumfang angeordnet.

Darüber hinaus ergibt sich in einem Endbereich des Betätigungsabschnitts 62 ein Abschnitt 63, in dem sich die Oberfläche des ersten Steuernockens 50, d. h. der Betätigungsabschnitt 52 des ersten Steuernockens 50, und die Betätigungsabschnitte 56, 58, 60 und 62 des zweiten Steuernockens 51 zu einer vom Außenumfang in Richtung der Mitte kontinuierlich verlaufenden Betätigungsfläche 63 ergänzen.

Der Kraftspeicher 25 ist ein Kraftspeicher mit einer ersten Federkraft, die geringer ist als die Federkraft (zweite Federkraft) der Kraftspeicher 20-24.

Im Folgenden wird der Betrieb der erfindungsgemäßen Vorrichtung unter Bezugnahme auf die Fig. 1 und 2 erläutert.

In der Schaltstellung "1" steht nur der Kraftspeicher 20, d. h. der feststehende Kraftspeicher 20, in Wirkverbindung zwischen der Achse 15 und dem Gehäuse 10 bzw. dem Gehäusekörper 11. In dieser Schaltstellung befindet sich die Betätigungsfläche 63 der Drehscheibe 46 in Ausrichtung zur länglichen Öffnung 45. Durch die sich kontinuierlich vom Außenumfang nach innen erstreckende Betätigungsfläche 63, die durch einen der ersten Steuernocken 50 bzw. dessen Betätigungsabschnitt 52 sowie die Betätigungsfläche 56, 58, 60, 62 des zweiten Steuernockens 51 gebildet wird, werden die Hebel 31-35 über die Ansätze 36 gegen die Federkraft der Schraubenfeder 39 um die Achse 37 verschwenkt. Dadurch gelangt der Eingriffsabschnitt 44 der einzelnen Hebel 31-35 außer Eingriff mit der jeweiligen Vertiefung 43 der Kraftspeicher 21-25. Dementsprechend stehen die Kraftspeicher 21-25 nicht in Wirkverbindung zwischen Achse und Gehäuse und tragen damit nicht zur Erzeugung eines Rückstellmoments bei, wenn das Gerät und damit die Aufnahme und die Achse verschwenkt werden.

Aus der Stufe "1" wird die Drehscheibe 46 über den Drehknopf 41 gegen den Uhrzeigersinn in die Stufe "2" verdreht. Während dieser Bewegung gleitet der Ansatz 36 des Hebels 35, der dem Kraftspeicher 25 mit der ersten Federkraft zugeordnet ist, entlang der Rampe 53 bis zum Schaltabschnitt 54 des ersten Steuernockens 50, d. h. von einem äußersten Abschnitt der Betätigungsfläche 63 entlang einer Rampe 53 zum Schaltabschnitt 54. In diesem Zustand drückt der Betätigungsabschnitt mit der Breite B4 (Betätigungsabschnitte 56, 58, 60, 62) des zweiten Steuernockens 51 auf die Ansätze 36 der Hebel 31-34 der Kraftspeicher 21-24, so dass diese nach wie vor nicht in Wirkverbindung zwischen Achse 15 und Gehäuse 10 stehen. Der Kraftspeicher 25 hingegen ist zugeschaltete, da der Eingriff zwischen dem Ansatz 36 und dem ersten Steuernocken 50, d. h. dessen Betätigungsabschnitt 52 bzw. 63 gelöst wurde. In diesem Zustand verschwenkt der Hebel unter gleichzeitiger Bewegung des Ansatzes 36 entlang der Rampe 53 um die Achse 37 und wird durch die Feder 39 gegen die Außenfläche des Außenrings 26 gedrückt bis er mit seinem Eingriffsabschnitt 44 in die Vertiefung 43 des Kraftspeichers 25 einrastet (bei Ausrichtung von Vertiefung und Eingriffsabschnitt) und den Kraftspeicher 25 in Wirkverbindung zwischen Achse 15 und Gehäuse 10 schaltet.

In der Stufe "3" gleitet der Ansatz 36 des Hebels 35 entlang der Rampe 53 eines der ersten Steuernocken 50 nach oben zu einem der Betätigungsabschnitte 52, wodurch der Hebel 35 des Kraftspeichers 25 mit der ersten Federkraft außer Eingriff mit dem Kraftspeicher verschwenkt wird. Bei dieser Drehbewegung der Drehscheibe 46 entgegen dem Uhrzeigersinn gleitet ferner der Ansatz 36 des Hebels 34 des Kraftspeichers 24 mit der zweiten Federkraft entlang der Rampe 61 nach unten, so dass der Hebel 34 um die Achse 37 verschwenken kann (aufgrund der Federkraft der Feder 39). Durch diese Verschwenkbewegung gelangt bei entsprechender Ausrichtung der Eingriffsabschnitt 44 des Hebels 34 in Eingriff mit der Vertiefung 43 des Kraftspeichers 24, so dass dieser Kraftspeicher 24 in Wirkverbindung zwischen Achse 15 und Gehäuse 10 geschaltet ist. In dieser Stufe "3" wirken demnach der Kraftspeicher 24 mit der zweiten Federkraft sowie der feststehende Kraftspeicher 20. Der Kraftspeicher 25 mit der ersten Federkraft ist nicht in Wirkverbindung geschaltet.

In der nächsten Stufe "4" gleitet der Ansatz 36 des Hebels 35 des Kraftspeichers 25 mit der ersten Federkraft wieder entlang der Rampe 53 nach unten zu einem Schaltabschnitt 54, so dass entsprechend den obigen Ausführungen der Kraftspeicher 25 wieder geschaltet wird und damit in Wirkverbindung zwischen Achse 15 und Gehäuse 10 gelangt. Darüber hinaus gleiten die Ansätze 36 der Hebel 31-33 auf der Betätigungsfläche, die gebildet wird durch die Betätigungsabschnitte 56, 58, 60 des zweiten Steuernockens 51, so dass die Hebel in einem unverschwenkten Zustand verbleiben und die Kraftspeicher 21-23 nicht in Wirkverbindung geschaltet sind. Es befinden sich demnach die Kraftspeicher 25, der feststehende Kraftspeicher 20 sowie der Kraftspeicher 24 in Wirkverbindung.

In der nächsten Stufe "5" wird entsprechend den obigen Ausführungen der Kraftspeicher 23 zugeschaltet und der Kraftspeicher 25 herausgenommen bzw. -geschaltet. In der Stufe "6" wird der Kraftspeicher 25 wieder zugeschaltet. In der Stufe "7" wird der Kraftspeicher 25 wieder herausgenommen und der Kraftspeicher 22 zugeschaltet, dann wiederum der Kraftspeicher 25 zugeschaltet (Stufe "8"). In der Stufe "9" wird der Kraftspeicher 25 wieder herausgenommen und der Kraftspeicher 21 zugeschaltet, in der Stufe "10" der Kraftspeicher 25 wiederum zugeschaltet, wobei in der Stufe "10" sämtliche Kraftspeicher 20-25 in Wirkverbindung stehen und die Maximalstellung erreicht ist.

Es versteht sich, dass in Abhängigkeit von der Dimensionierung der Drehscheibe 46 beliebig viele Kraftspeicher vorgesehen sein können, d. h. die Lösung der vorliegenden Erfindung ist sehr flexibel und nicht auf eine bestimmte Anzahl von Kraftspeichern begrenzt.

Darüber hinaus können theoretisch auch mehrere Kraftspeicher mit unterschiedlichen Federkräften zur Verfügung stehen und mehrere parallel auf konzentrisch zueinander angeordneten Kreisringen vorgesehene erste Steuernocken 50.

Im Folgenden wird eine alternative Ausführungsform der vorliegenden Erfindung unter Bezugnahme auf Fig. 3 beschrieben. In Fig. 3 sind gleiche oder ähnliche Elemente mit den gleichen Bezugziffern gekennzeichnet. Ferner wird zur Vermeidung von Wiederholungen darauf verzichtet gleiche Elemente erneut zu erläutern.

Die Ausführungsform in Fig. 3 unterscheidet sich einerseits dadurch, dass die Hebel (beispielhaft ist der Hebel 35 dargestellt) keinen integral ausgebildeten Ansatz 36 aufweisen. Stattdessen ist in dem Gehäuse linear geführt und jedem Hebel 35 zugeordnet ein Stößel 64 vorgesehen. D. h. der Stößel 64 ist in dem Gehäusekörper 11 linear geführt (z. B. in einer seinem Querschnitt entsprechenden Bohrung) und kommt mit einem unteren Ende 65 des jeweiligen Hebels 35 in Kontakt. Wie bei der Ausgestaltung in Fig. 1 werden die Hebel 35 durch eine Schraubenfeder 39 in die Schaltstellung beaufschlagt, d. h. in Eingriff zwischen dem Eingriffselement 44 und der Vertiefung 43 (siehe Fig. 1). Im Gegensatz zur Fig. 1 kommt jedoch eine Schenkelfeder 66 und/oder ein Blattfederpaket 67 zum Einsatz. Das Blattfederpaket 67 ist integral ausgebildet und weist mehrere parallel zueinander angeordnete über einen Zwischenraum beabstandete Federelemente 68 auf, die den jeweiligen Hebeln 35 bzw. dessen oberen Enden (in einem Bereich des Fingriffsabschnitts 44) zugeordnet sind. In Bezug auf die Schenkelfedern 66, ist, ähnlich der Verwendung der Schraubfedern 39 in Fig. 1, jedem Hebel 35 eine derartige Feder zugeordnet.

Die ersten Steuernocken 50 sowie der zweite Steuernocken 51 wirken auf die Einzelstößel 64 der Ausführungsform in Fig. 3, um die Hebel indirekt zu betätigen. Dazu ragen die Einzelstößel jeweils aus ihrer Führung von der Oberfläche vor, die von der Nockensteuerung überstrichen wird.

Alternativ zu der Ausgestaltung der Steuernocken, wie sie in Fig. 2 dargestellt sind, können die ersten Steuernocken 50 in einer umlaufenden Nut (Fig. 3) ausgebildet sein, deren Tiefe wellenförmig zunimmt bzw. abnimmt, um die entsprechenden Betätigungsabschnitte 52 und 54 Schaltabschnitte in Fig. 2 zu bilden. Gleichermaßen kann der zweite Steuernocken 51 durch mehrere konzentrisch und parallel verlaufende Nuten, die durch Stege getrennt sind, ausgebildet sein, in denen entsprechend die Rampen 55, 57, 59, 61 aus Fig. 2 von einem tiefsten Punkt der entsprechenden Nuten mit den entsprechenden Betätigungsabschnitten 56, 58, 60, 62, bei denen es sich um die höchsten Punkte der Nuten handelt, verbunden sind, so dass bei Betrachtung der Nuten in Kombination ebenfalls ein zweiter Steuernocken 51 gebildet wird, der in Umfangsrichtung von der Mitte nach außen hin breiter wird, d. h. dessen Betätigungsfläche breiter wird. Mit anderen Worten muss die Betätigungsfläche 63 nicht kontinuierlich von innen nach außen verlaufen. Diesbezüglich wird auf die Ausführungen zu Fig. 2 verwiesen.

Es versteht sich, dass die Drehscheibe 46, wie sie in Fig. 3 dargestellt ist, ebenso in der Ausführungsform in Fig. 1 zum Einsatz kommen kann. Gleichermaßen versteht sich, dass auch die Kombination der Drehscheibe 46 aus Fig. 1 und 2 mit den Stößeln 64 aus Fig. 3 denkbar ist. Gleiches gilt auch für den Austausch der Feder 39, 66, 67 aus den Fig. 1 und 3.

Darüber hinaus versteht sich, dass innerhalb des Umfangs der Erfindung, wie er in den Patentansprüchen definiert ist, verschiedenartige Modifikationen und Änderungen möglich sind. Z. B. ist die Positionierung der Drehscheibe 46 nicht auf die dargestellte Positionierung beschränkt und es wäre über eine entsprechende Übersetzung auch denkbar die Drehscheibe 46 an einer der Stirnseiten des Gehäusekörpers 11 zu positionieren oder aber an einer anderen Position entlang des Außenumfangs des zumindest teilweise zylindrischen Grundkörpers 11. Ferner ist es selbstverständlich auch denkbar eine andere Lösung als die Hebellösung einzusetzen und beispielsweise nur die Stößel 64 aus Fig. 3 zu verwenden, wobei diese in diesem Fall durch die Betätigungsabschnitte der einzelnen Nocken 50, 51 in Eingriff, d. h. in Schaltstellung mit den entsprechenden Kraftspeichern 21-25 gebracht werden. Dabei ist es jedoch bevorzugt, dass die Stößel 64 selbst federnd ausgestaltet sind, d. h. aus einem elastischen Material gebildet sind oder aber teleskopartig unter Zwischenschaltung einer Feder nachgiebig sind. Sie können dann in der entsprechenden Stellung auf dem Außenring 26 der Kraftspeicher 21-25 gleiten bis eine entsprechende Ausrichtung der Stößel 64 zur Vertiefung 43 gegeben ist und ein Eingriff, dann aufgrund der Federkraft des Stößel 64, erfolgt.

Ferner ist es auch denkbar weitere Elemente zwischen Drehscheibe 46 und den Verriegelungselementen vorzusehen, obwohl es bevorzugt ist eine direkte Wirkung der Nockensteuerung auf die Verriegelungselemente wie in Fig. 1 umzusetzen, da dies die Anzahl der Teile stark reduziert, mit dem Vorteil der Gewichts- und Kotenreduzierung sowie der Vereinfachung der Montage.

## Patentansprüche

1. Stativkopf zum verschwenkbaren Aufnehmen eines Geräts, insbesondere einer Film- oder Fernsehkamera, umfassend
ein Gehäuse (10),
eine in dem Gehäuse (10) drehbar gelagerte Achse (15),
eine mit der Achse (15) in Verbindung stehende Aufnahme (16, 17) für das Gerät,
wenigstens zwei separate Kraftspeicher (21-25) die jeweils zwischen der Achse (15) und dem Gehäuse (10) angeordnet sind, und
eine Ausgleichseinrichtung mit jeweils einer Verriegelungseinrichtung (31-35) für die Kraftspeicher, um die Kraftspeicher (21-25) jeweils in Wirkverbindung zwischen Gehäuse (10) und Achse (15) zu schalten, so dass über die Achse (15) entsprechend dem Drehmoment des Geräts ein Rückstellmoment auf die Aufnahme (16, 17) ausgeübt wird, einem gemeinsamen Betätigungselement (46), um die Kraftspeicher (21-25) über die Verriegelungseinrichtungen (31-35) wählbar einzeln oder in Kombination zuschalten und einer Nockensteuerung (50, 51), die derart auf die Verriegelungseinrichtungen (31-35) wirkt, dass die Kraftspeicher (21-25) über die Verriegelungseinrichtungen (31-35) wählbar einzeln oder in Kombination schaltbar sind, wobei
das Betätigungselement (46) als Drehscheibe ausgebildet ist **dadurch gekennzeichnet, dass** die Drehscheibe auf der dem Gehäuse zugewandten Seite die Nockensteuerung (50, 51) aufweist.

2. Stativkopf nach Anspruch 1, bei dem die Drehscheibe (46) eine kreisrunde Form aufweist.

3. Stativkopf nach Anspruch 1 oder 2, bei dem die Drehscheibe (46) mehrere in gleicher Teilung entlang des Umfangs beabstandete erste Steuernocken (50) aufweist, die auf eine Betätigung der Drehscheibe (46) abwechselnd einen der Kraftspeicher (25) schalten.

4. Stativkopf nach einem der vorstehenden Ansprüche, bei dem die Drehscheibe (46) einen in Umfangsrichtung von der Mitte nach Außen stufenweise breiter oder schmaler werdenden zweiten Steuernocken (51) aufweist, der auf eine Betätigung der Drehscheibe (46) nach einander jeweils einen Kraftspeicher (21-24) schaltet.

5. Stativkopf nach einem der vorstehenden Ansprüche, bei dem die Verriegelungseinrichtungen (31-35) der Ausgleichseinrichtung jeweils eine Feder (39) umfassen, die die Verriegelungseinrichtungen (31-35) in die Schaltstellung drücken, wobei die Nockensteuerung (50, 51) der Drehscheibe (46) die Verriegelungseinrichtungen (31-35) wahlweise aus der Schaltstellung löst.

6. Stativkopf nach einem der vorstehenden Ansprüche, bei dem die Verriegelungseinrichtungen (31-35) der Ausgleichseinrichtung jeweils durch einen verschwenkbaren Hebel gebildet sind.

7. Stativkopf nach Anspruch 6, bei dem die Hebel (31-35) jeweils einen Ansatz (36) aufweisen, der durch eine, bevorzugt längliche, Öffnung (45) in dem Gehäuse (10) ragt, die einem Bereich, der von der mit der Nockensteuerung (50, 51) versehenen Seite der Drehscheibe (46) überstrichen wird, ausgebildet ist, und mit der Nockensteuerung (50, 51) der Drehscheibe (46) in Eingriff bringbar ist.

8. Stativkopf nach Anspruch 6, bei dem zwischen jedem der Hebel (31-35) und der Nockensteuerung (50, 51) ein in dem Gehäuse (10) linear verschiebbarer Stößel (64) vorgesehen ist, der durch eine Öffnung (45) in dem Gehäuse (10) ragt, die in einem Bereich, der von der mit der Nockensteuerung (50, 51) versehenen Seite der Drehscheibe (46) überstrichen wird, ausgebildet ist, und mit der Nockensteuerung (50, 51) der Drehscheibe (46) in Eingriff bringbar ist.

9. Stativkopf nach einem der vorstehenden Ansprüche, bei dem ein feststehender Kraftspeicher (20) vorgesehen ist, der immer in Wirkverbindung zwischen Gehäuse (10) und Achse steht, so dass über die Achse (15) entsprechend dem Drehmoment des Geräts ein Grundrückstellmoment auf die Aufnahme (16, 17) ausgeübt wird.

10. Stativkopf nach einem der vorstehenden Ansprüche, bei dem die Drehscheibe (46) mit einem Drehknopf versehen ist, der als Handhabe für das Betätigungselement dient.

## Claims

1. Tripod head for pivotably receiving an appliance, in particular a film or television camera, comprising
a housing (10),
a shaft (15) mounted rotatably in the housing (10),
a receptacle (16, 17) for the appliance, which is connected to the shaft (15),
at least two separate energy storage mechanisms (21-25) which are each arranged between the shaft (15) and the housing (10), and
a compensating device with a locking device (31-35) for each of the energy storage mechanisms in order to operatively connect the energy storage mechanisms (21-25) between housing (10) and shaft (15), so that a return moment is applied via the shaft (15) to the receptacle (16, 17) according to the torque of the appliance, a common actuating element (46) in order to switch the energy storage mechanisms (21-25) via the locking devices (31-35) optionally individually or in combination, and a cam control means (50, 51) which acts on the locking devices (31-35) in such a way that the energy storage mechanisms (21-25) can be switched via the locking devices (31-35) optionally individually or in combination, the actuating element (46) being designed as a swivel plate, **characterised in that** the swivel plate comprises the cam control means (50, 51) on the side facing towards the housing.

2. Tripod head according to claim 1, in which the swivel plate (46) has a round shape.

3. Tripod head according to claim 1 or 2, in which the swivel plate (46) has several first control cams (50) which are spaced apart equally along the circumference and which, upon actuation of the swivel plate (46), alternately switch one of the energy storage mechanisms (25).

4. Tripod head according to any of the preceding claims, in which the swivel plate (46) has a second control cam (51) which becomes gradually wider or narrower from the centre to the outside in the circumferential direction and which, upon actuation of the swivel plate (46), successively switches in each case one energy storage mechanism (21-24).

5. Tripod head according to any of the preceding claims, in which the locking devices (31-35) of the compensating device each comprise a spring (39), which springs (39) push the locking devices (31-35) into the switching position, the cam control means (50, 51) of the swivel plate (46) optionally releasing the locking devices (31-35) from the switching position.

6. Tripod head according to any of the preceding claims, in which the locking devices (31-35) of the compensating device are in each case formed by a pivotable lever.

7. Tripod head according to claim 6, in which the levers (31-35) each have an attachment (36) which extends through a preferably elongate opening (45) in the housing (10) which is formed in a region covered by the side of the swivel plate (46) provided with the cam control means (50, 51), and can be brought into engagement with the cam control means (50, 51) of the swivel plate (46).

8. Tripod head according to claim 6, in which between each of the levers (31-35) and the cam control means (50, 51) is provided a plunger (64) which is linearly displaceable in the housing (10) and which extends through an opening (45) in the housing (10) which is formed in the region covered by the side of the swivel plate (46) provided with the cam control means (50, 51), and can be brought into engagement with the cam control means (50, 51) of the swivel plate (46).

9. Tripod head according to any of the preceding claims, in which there is provided a fixed energy storage mechanism (20) which is always operatively connected between housing (10) and shaft, so that a basic return moment is applied via the shaft (15) to the receptacle (16, 17) according to the torque of the appliance.

10. Tripod head according to any of the preceding claims, in which the swivel plate (46) is provided with a knob which serves as a handle for the actuating element.

## Revendications

1. Tête de support, pour supporter, avec possibilité de pivotement, un appareil, en particulier une caméra à film ou de télévision, comprenant :
un boîtier (10),
un axe (15), monté à rotation dans le boîtier (10),
un logement (16, 17), relié à l'axe (15), pour l'appareil,
au moins deux accumulateurs de force (21 à 25) séparés, chacun disposés entre l'axe (15) et le boîtier (10), et
un dispositif de compensation, avec chaque fois un dispositif de verrouillage (31 à 35) pour les accumulateurs de force, pour commuter les accumulateurs de force (21 à 25) chaque fois en liaison fonctionnelle entre boîtier (10) et axe (15), de manière que, par l'intermédiaire de l'axe (15), de manière correspondante au couple de rotation de l'appareil, un couple de rappel soit exercé sur le logement (16, 17), un élément d'actionnement (46) commun, pour commuter les accumulateurs de force (21 à 25) par l'intermédiaire des dispositifs de verrouillage (31 à 35), au choix individuellement ou en combinaison, et une commande à came (50, 51), agissant sur les dispositifs de verrouillage (31 à 35) de manière que les accumulateurs de force (21 à 25) puissent être commutés, au choix individuellement ou en combinaison, par l'intermédiaire des dispositifs de verrouillage (31 à 35), où
l'élément d'actionnement (46) est réalisé sous forme de disque rotatif, **caractérisé en ce que** le disque rotatif présente la commande à came (50, 51) sur le côté tourné vers le boîtier.

2. Tête de support selon la revendication 1, pour laquelle le disque rotatif (46) présente une forme ronde circulaire.

3. Tête de support selon la revendication 1 ou 2, pour laquelle le disque rotatif (46) présente plusieurs premières cames de commande (50), espacées selon une division identique le long de la périphérie, commutant de manière alternée l'un des accumulateurs de force (25) suite à un actionnement du disque rotatif (46).

4. Tête de support selon l'une des revendications précédentes, pour laquelle le disque rotatif (46) présente une deuxième came de commande (51), devenant graduellement plus large ou plus étroite en direction périphérique, du centre vers l'extérieur, commutant l'un après l'autre chaque fois un accumulateurs de force (21 à 24) suite à un actionnement du disque rotatif (46).

5. Tête de support selon l'une des revendications précédentes, pour laquelle les dispositifs de verrouillage (31 à 35) du dispositif de compensation comprennent chacun un ressort (39), pressant les dispositifs de verrouillage (31 à 35) à la position de commutation, la commande à came (50, 51) du disque rotatif (46) dégageant au choix les dispositifs de verrouillage (31 à 35) hors de la position de commutation.

6. Tête de support selon l'une des revendications précédentes, pour laquelle les dispositifs de verrouillage (31 à 35) du dispositif de compensation sont chacun formés par un levier pivotant.

7. Tête de support selon la revendication 6, pour laquelle les leviers (31 à 35) présentent chacun un appendice (36) pénétrant dans le boîtier (10) en passant par une ouverture (45), de préférence allongée, réalisée dans une zone couverte par le côté, muni de la commande à came (50, 51), du disque rotatif (46), et susceptible d'être mise en prise avec la commande à came (50, 51) du disque rotatif (46).

8. Tête de support selon la revendication 6, pour laquelle un poussoir (64), déplaçable de manière linéaire dans le boîtier (10), est prévu entre chacun des leviers (31 à 35) et la commande à came (50, 51), le poussoir (64) pénétrant dans le boîtier (10) en passant par une ouverture (45) réalisée dans une zone couverte par le côté, muni de la commande à came (50, 51), du disque rotatif (46), et susceptible d'être mis en prise avec la commande à came (50, 51) du disque rotatif (46).

9. Tête de support selon l'une des revendications précédentes, pour laquelle est prévu un accumulateur de force (20) stationnaire, toujours placé en liaison fonctionnelle entre boîtier (10) et axe, de manière que, par l'intermédiaire de l'axe (15), de manière correspondante au couple de rotation de l'appareil, un couple de rappel de base soit exercé sur le logement (16, 17).

10. Tête de support selon l'une des revendications précédentes, pour laquelle le disque rotatif (46) est muni d'un bouton rotatif, servant de manette pour l'élément d'actionnement.
